# EUROPÄISCHE PATENTSCHRIFT

(11) **EP 1 276 701 B1**
(45) Veröffentlichungstag und Bekanntmachung des Hinweises auf die Patenterteilung: **05.12.2012**
(21) Anmeldenummer: 01915409.5
(22) Anmeldetag: 23.03.2001
(51) Int. Cl.: C03C 15/00, C09K 13/08

(54) **ÄTZPASTEN FÜR ANORGANISCHE OBERFLÄCHEN**
ETCHING PASTES FOR INORGANIC SURFACES
PATES D'ATTAQUE CHIMIQUE POUR SURFACES INORGANIQUES

(30) Priorität: 28.04.2000 DE 10020817; 16.01.2001 DE 10101926
(43) Veröffentlichungstag der Anmeldung: 22.01.2003
(73) Patentinhaber: Merck Patent GmbH, 64293 Darmstadt (DE)
(72) Erfinder: KLEIN, Sylke, 64380 Rossdorf (DE); HEIDER, Lilia, 64560 Riedstadt (DE); WIEGAND, Claudia, 64291 Darmstadt (DE); KÜBELBECK, Armin, 64625 Bensheim (DE); STOCKUM, Werner, 64354 Reinheim (DE)
(86) Internationale Anmeldenummer: PCT/EP2001/003317
(87) Internationale Veröffentlichungsnummer: WO 2001/083391

(56) Entgegenhaltungen:
- EP-A- 0 229 915
- WO-A-00/40518
- WO-A-98/30652
- DD-A- 153 360
- US-A- 4 578 407
- US-A- 4 921 626
- PATENT ABSTRACTS OF JAPAN vol. 018, no. 313 (C-1212), 15. Juni 1994 (1994-06-15) & JP 06 065544 A (HITACHI CHEM CO LTD), 8. März 1994 (1994-03-08)

## Beschreibung

Die vorliegende Erfindung betrifft neue Ätzmedien in Form von druckfähigen, homogenen, partikelfreien Ätzpasten mit nichtnewtonschem Fließverhalten zum Ätzen von anorganischen, glasartigen amorphen oder kristallinen Oberflächen, insbesondere von Gläsern oder Keramiken, vorzugsweise auf SiO₂- oder Siliziumnitrid-basierenden Systemen, sowie die Verwendung dieser Ätzmedien.

Unter anorganischen Oberflächen werden oxidische und nitridhaltige Verbindungen des Siliziums verstanden, insbesondere Siliziumoxid- und Siliziumnitrid-Oberflächen.

Definition von Glas:

An sich wird unter Glas eine einheitliche Masse z.B. Quarzglas, Fensterglas, Borosilikatglas, als auch dünne Schichten dieser Materialien verstanden, die auf anderen Substraten (z.B. Keramiken, Metallblechen, Siliziumwafer) durch verschiedene, dem Fachmann bekannten Verfahren (CVD, PVD, Spin-on, thermische Oxidation u. a.) erzeugt werden.

Im folgenden werden unter Gläsern Siliziumoxid- und Siliziumnitrid - enthaltende Materialien verstanden, die ohne Auskristallisation der Glaskomponenten im festen amorphen Aggregatzustand vorliegen und in der Mikrostruktur aufgrund fehlender Fernordnung einen hohen Fehlordnungsgrad aufweisen.

Es werden neben dem reinen SiO₂-Glas (Quarzglas) alle Gläser erfasst (z. B. dotierte Gläser wie Borosilikat-, Phosphorsilikat-, Borophosphorsilikatgläser, Farb-, Milch-, Kristallgläser, optische Gläser), die SiO₂ und andere Komponenten enthalten, insbesondere Elemente wie z.B. Kalzium, Natrium, Aluminium, Blei, Lithium, Magnesium, Barium, Kalium, Bor, Berylium, Phosphor, Gallium, Arsen, Antimon, Lanthan, Zink, Thorium, Kupfer, Chrom, Mangan, Eisen, Kobalt, Nickel, Molybdän, Vanadium, Titan, Gold, Platin, Palladium, Silber, Cerium, Cäsium, Niob, Tantal, Zirkonium, Neodym, Praseodym, welche in Form von Oxiden, Karbonaten, Nitraten, Phosphaten, Sulfaten und/oder Halogeniden in den Gläsern auftreten oder als Dotierungselemente in den Gläsern fungieren. DotierteGläser sind z. B. Borosilikat-, Phosphorsilikat-, Borophosphorsilikatgläser, Farb-, Milch-, Kristallgläser und optische Gläser.

Das Siliziumnitrid kann ebenfalls andere Elemente, wie Bor, Aluminium, Gallium, Indium, Phosphor, Arsen, oder Antimon enthalten.

Definition von Siliziumoxid- und Siliziumnitrid-basierenden Systemen:

Als Siliziumoxid-basierende Systeme werden im folgenden alle kristallinen Systeme definiert, die nicht unter die oben gegebene Definition der amorphen SiO₂-Gläser fallen und auf Siliziumdioxid basieren, das können insbesondere die Salze und Ester der Orthokieselsäure und deren Kondensationsprodukte sein- allgemein vom Fachmann als Silikate bezeichnet - sowie Quarz und Glaskeramiken.

Weiterhin werden andere auf Siliziumoxid- und Siliziumnitrid- basierende Systeme, insbesondere die Salze und Ester der Orthokieselsäure und deren Kondensationsprodukte mit erfasst. Es werden neben dem reinen SiO₂ (Quarz, Tridymit, Cristobalit) alle SiO₂-basierende Systeme erfasst, die aus SiO₂ bzw. aus "diskreten" und/oder verknüpften [SiO₄]-Tetraedern aufgebaut sind wie z.B. Insel-, Gruppen-, Ring-, Ketten-, Band-, Schicht-, Gerüstsilikate und andere Komponenten enthalten, insbesondere Elemente/Komponenten wie z.B. Kalzium, Natrium, Aluminium, Lithium, Magnesium, Barium, Kalium, Berylium, Scandium, Mangan, Eisen, Titan, Zirkonium, Zink, Cerium, Yttrium, Sauerstoff, Hydroxylgruppen, Halogenide.

Als Siliziumnitrid-basierende Systeme werden im folgenden alle kristallinen und teilkristallinen (meist als mikrokristallin bezeichneten) Systeme definiert, die nicht unter die oben gegebene Definition der amorphen Siliziumnitrid-Gläser/-Schichten fallen. Dazu zählen das Si₃N₄ in seinen Modifikationen α-Si₃N₄ und β-Si₃N₄ und alle kristallinen und teilkristallinen SiNₓ-, SiNₓ:H Schichten. Das kristalline Siliziumnitrid kann andere Elemente wie Bor, Aluminium, Gallium, Indium, Phosphor, Arsen, Antimon enthalten.

### 1. Ätzen von Strukturen auf Glas

Durch Anwendung von Ätzmitteln, d.h. von chemisch aggressiven Verbindungen kommt es zur Auflösung des, dem Angriff des Ätzmittels ausgesetzten Materials. Dabei wird nicht nur die erste Schicht der Angriffsfläche, sondern - von der Angriffsfläche aus betrachtet - werden auch tiefer liegende Schichten angegriffen und abgetragen.

### 2. Ätzen von Strukturen auf Siliziumoxid- und Siliziumnitrid -basieren-den Gläsern und anderen Siliziumoxid- und Siliziumnitrid-basierenden Systemen

Nach dem heutigen Stand der Technik können beliebige Strukturen selektiv in Siliziumoxid- und Siliziumnitrid -basierende Gläser und andere Siliziumoxid- und Siliziumnitrid -basierende Systeme bzw. deren Oberflächen und deren Schichten variabler Dicke direkt durch lasergestützte Ätzverfahren oder nach erfolgter Maskierung nasschemisch [1, 2] bzw. durch Trockenätzverfahren geätzt werden. [3]

Bei den lasergestützten Ätzverfahren rastert der Laserstrahl das gesamte Ätzmuster Punkt für Punkt auf dem Glas ab, was neben einem hohen Präzisionsgrad auch einen beträchtlichen Justier- und Zeitaufwand erfordert.

Die nasschemischen und Trockenätzverfahren beinhalten materialintensive, zeit- und kostenaufwendige Prozessschritte:
A. Maskierung der nicht zu ätzenden Bereiche, z.B. durch:
   - Fotolithografie: Herstellung eines Negativs oder Positivs der Ätzstruktur (abhängig vom Lack), Belackung der Substratoberfläche (z. B. durch Schleuderbelackung mit einem flüssigen Fotolack), Trocknen des Fotolacks, Belichtung der belackten Substratoberfläche, Entwicklung, Spülen, ggf. Trocknen
B. Ätzen der Strukturen durch:
   - Tauchverfahren (z.B. Nassätzen in Nasschemiebänken): Eintauchen der Substrate in das Ätzbad, Ätzvorgang, mehrfaches Spülen in H₂O-Kaskadenspülbecken, Trocknen
   - Spin-on oder Sprühverfahren: Die Ätzlösung wird auf ein drehendes Substrat aufgebracht, der Ätzvorgang kann ohne/mit Energieeintrag (z.B. IR- oder UV-Bestrahlung) erfolgen, danach folgen Spülen und Trocknen
   - Trockenätzverfahren wie z.B. Plasmaätzen in teuren Vakuumanlagen oder Ätzen mit reaktiven Gasen in Durchflussreaktoren

   [1] D.J. Monk, D.S. Soane, R.T. Howe, Thin Solid Films 232 (1993), 1
   [2]J. Bühler, F.-P. Steiner, H. Baltes, J. Micromech. Microeng. 7 (1997), R1
   [3] M. Köhler "Ätzverfahren für die Mikrotechnik", Wiley VCH 1983.

### 3. Ganzflächiges Ätzen von Siliziumoxid- und Siliziumnitrid- basierenden Gläsern und anderen Siliziumoxid- und Siliziumnitrid- basierenden Systemen

Um Siliziumoxid- und Siliziumnitrid- basierende Gläser und andere Siliziumoxid- und Siliziumnitrid- basierende Systeme und deren Schichten variabler Dicke ganzflächig bis in eine bestimmte Tiefe zu ätzen, werden vorwiegend Nassätzverfahren genutzt. Die Siliziumoxid- und Siliziumnitrid- basierenden Gläser und andere Siliziumoxid- und Siliziumnitrid- basierende Systeme und deren Schichten variabler Dicke werden in Ätzbäder, die meist die giftige und stark ätzende Flusssäure bzw. andere Mineralsäure als Ätzkomponente enthalten, getaucht.

Die Nachteile der beschriebenen Ätzverfahren liegen in den zeit-, material-, kostenintensiven und in teilweise technologisch und sicherheitstechnisch aufwendigen und diskontinuierlich durchgeführten Prozessschritten begründet.

Aus US 4,921626 A1 ist eine Zusammensetzung zum Ätzen von Glas bekannt, die 2 - 4 Gew.-% Xanthan zur Einstellung der Viskosität und 16 - 30 Gew.-% Ammoniumbifluorid als Ätzkomponente enthält. Weiterhin enthält diese Zusammensetzung 20 - 24 Gew.-% Propylenglykol und 45 - 60 Gew.-% Wasser. In jedem Fall enthält diese Zusammensetzung mindestens 45 Gew.-% Wasser. Diese Zusammensetzung ist zum Ätzen von Identifizierungskennzeichen, wie Seriennummern auf Autoscheiben, geeignet, jedoch ist sie nicht geeignet zum Drucken gleichmäßiger dünner Linien im µm-Maßstab, wie sie in der Halbleiterindustrie und Solartechnik gefordert sind. Zusammensetzungen, wie sie durch dieses Patent beschrieben sind, führen bei Verdrucken mit einer entsprechend hohen Auflösung zu unregelmäßigen und unterbrochenen Ätzlinien.

Aus WO 98/30652 wiederum ist eine Zusammensetzung zum Deoxidieren von Aluminiumoberflächen bekannt, die geeignet ist Aluminiumoxidbelägen von Aluminiumoberflächen zu entfernen. Diese Zusammensetzungen sind insbesondere geeignet für die Behandlung von Flugzeugoberflächen und von Schienenfahrzeugen. Sie bestehen mindestens aus einer Fluoridionen freisetzenden Komponente, einer Komponente, welche eine Säure mit einer höheren Ionisierungskonstante als HF freisetzt, einer Komponente zur Regulierung der Viskosität, einem anionischenn Tensid, einem nichtionischen Tensid, einem Hydrotopierungsmittel, einer färbende Substanz, einem Biozid und einem Oxidationsmittel. Diese Zusammensetzungen sind so formuliert, dass sie eine gute Benetzung der und ein gutes Spreiten auf den behandelten Oberflächen gewährleisten.Sie sind jedoch nicht geeignet, in Form von homogenen dünnen Linien oder Strukturen im µm-Maßstab auf Siliziumoxid- oder Siliziumnitridoberflächen verdruckt zu werden, durch die dann wiederum entsprechend dünne gleichmäßige geätzte Strukturen erhalten werden können.

Aufgabe der vorliegenden Erfindung ist es daher, Zusammensetzungen zum Ätzen von Gläsern, basierend auf Siliziumoxid oder Siliziumnitrid, zur Verfügung zu stellen, welche sich in einfachen Druckverfahren selektiv mit möglichst hohen Durchsätzen, auf solchen Oberflächen homogen verdrucken lassen, so dass unter Verwendung dieser Zusammensetzungen in in der Halbleitertechnologie bisher üblichen Naßätzverfahren das Aufbringen und Strukturieren einer Photoresistschicht eingespart werden kann, wodurch ein wesentlich kostengünstigeres Ätzen ermöglicht werden kann.

Gegenstand der Erfindung sind somit druckfähige, homogene, partikelfreie Ätzpasten, die ein vorteilhaftes, nichtnewtonsches Fließverhalten aufweisen und deren Verwendung zum Ätzen von anorganischen Oberflächen, insbesondere von Oberflächen von auf Siliziumoxid und Siliziumnitrid basierenden Gläsern und anderer auf Siliziumoxid und Siliziumnitrid basierenden Systeme und ihrer Schichten variabler Dicke.

Gegenstand der Erfindung ist auch die Verwendung dieser homogenen, partikelfreien Ätzpasten, die ein nichtnewtonsches Fließverhalten aufweisen, in - im Vergleich zu den üblichen Nass- und Trockenätzverfahren in der flüssigen bzw. Gasphase - kostengünstigeren, für hohe Durchsätze geeignete, kontinuierlich durchführbare, sowie technologisch einfachen Druck-/Ätzverfahren für Glas und für andere auf Siliziumdioxid und Siliziumnitrid basierende Systemen.

Die Herstellung, Formgebung und Nachbehandlung wie z.B. Schleifen, Polieren, Läppen, Wärmebehandlung der SiO₂-basierenden Systeme sind - wie bei den Gläsern - für die erfindungsgemäß beschriebene Verwendung von druckfähigen, homogenen, partikelfreien Ätzpasten mit nichtnewtonschem Fließverhalten unerheblich.

Die Erfindung bezieht sich sowohl auf das Ätzen von SiO₂- oder Siliziumnitrid- beschichteten Substraten als einheitliche massive nichtporöse und poröse Festkörper (z.B. Glaskörner, -pulver, Flach-, Hohl-, Spiegel-, Sinterglas), gewonnen z.B. aus Glasschmelzen, als auch auf das Ätzen von nichtporösen und porösen Glasschichten variabler Dicke, die auf anderen Substraten (z.B. Keramiken, Metallblechen, Siliziumwafer) durch verschiedene, dem Fachmann bekannten Verfahren (z.B. CVD, PVD, Spin-on von Si-haltigen Precursoren, thermische Oxidation...) erzeugt wurden.

Die Ätzpasten werden in einem einzigen Verfahrensschritt auf die zu ätzende Substratoberfläche aufgebracht. Die zu ätzende Oberfläche kann dabei eine Fläche oder Teilfläche an einem homogenen massiven porösen oder nichtporösen Körper aus Siliziumoxid- oder Siliziumnitrid- basierendem Glas und anderen Siliziumoxid- und Siliziumnitrid -basierenden Systemen sein, (z.B. die Oberfläche einer Siliziumoxid-Glasscheibe) und/oder eine Fläche oder Teilfläche an einer porösen und nichtporösen Schicht aus Glas und anderen Siliziumoxid- und Siliziumnitrid -basierenden Systemen auf einem Trägermaterial sein.

Ein für die Übertragung der Ätzpaste auf die zu ätzende Substratoberfläche geeignetes Verfahren mit hohem Automatisierungsgrad und Durchsatz nutzt die Drucktechnik. Insbesondere die Sieb-, Schablonen-, Tampon-, Stempel-, Ink-Jet-Druckverfahren sind dem Fachmann bekannte Druckverfahren. Ein manuelles Auftragen ist ebenfalls möglich.

In Abhängigkeit von der Sieb-, Schablonen-, Klischee-, Stempelgestaltung bzw. Patronenansteuerung ist es möglich, die erfindungsgemäß beschriebenen druckfähigen, homogenen, partikelfreien Ätzpasten mit nichtnewtonschem Fließverhalten ganzflächig bzw. gemäß der Ätzstrukturvorlage selektiv nur an den Stellen aufzutragen, an denen eine Ätzung erwünscht ist. Sämtliche Maskierungs- und Lithografieschritte wie unter A) beschrieben entfallen. Der Ätzvorgang kann mit oder ohne Energieeintrag, z.B. in Form von Wärmestrahlung (mit IR-Strahler) stattfinden. Nach erfolgter Ätzung werden die druckfähigen, homogenen, partikelfreien Ätzpasten mit nichtnewtonschem Fließverhalten von der geätzten Fläche mit einem geeigneten Lösungsmittel abgespült und/oder ausgebrannt.

Durch Variation folgender Größen lassen sich die Ätztiefe in Siliziumoxid- und Siliziumnitrid- basierenden Gläsern bzw. anderen Siliziumoxid- und Siliziumnitrid- basierenden Systemen und deren Schichten variabler Dicke, und beim selektiven Strukturätzen zusätzlich die Kantenschärfe der Ätzstrukturen einstellen:
- Konzentration und Zusammensetzung der Ätzkomponenten
- Konzentration und Zusammensetzung der eingesetzten Lösungsmittel
- Konzentration und Zusammensetzung der Verdickersysteme
- Konzentration und Zusammensetzung der gegebenenfalls zugesetzten Säuren
- Konzentration und Zusammensetzung der gegebenenfalls zugesetzten Additive wie Entschäumer, Thixotropiermittel, Verlaufsmittel, Entlüfter, Haftvermittler
- Viskosität der erfindungsgemäß beschriebenen druckfähigen, homogenen, partikelfreien Ätzpasten mit nichtnewtonschem Fließverhalten
- Ätzdauer mit oder ohne Energieeintrag in die mit der jeweiligen Ätzpaste bedruckten anorganischen Oberfläche und deren Schichten und
- Energieeintrag in das mit der Ätzpaste bedruckte System.

Die Ätzdauer kann je nach Anwendungszweck, gewünschter Ätztiefe und/oder Kantenschärfe der Ätzstrukturen zwischen einigen Sekunden und mehreren Minuten betragen. Im allgemeinen wird eine Ätzdauer zwischen 1 - 15 min eingestellt.

Die erfindungsgemäß beschriebenen druckfähigen, homogenen, partikelfreien Ätzpasten mit nichtnewtonschem Fließverhalten sind - im Vergleich mit flüssigen, gelösten bzw. gasförmigen Ätzmitteln wie anorganische Mineralsäuren der Gruppe Flusssäure, Fluoride, HF-Gas, und SF₆ - vorteilhafter Weise wesentlich einfacher, sicherer und ätzmittelsparender zu handhaben.

Die erfindungsgemäßen druckfähigen, homogenen, partikelfreien Ätzpasten mit nichtnewtonschem Fließverhalten setzen sich zusammen aus:
a. einer ätzenden Komponente für Glas und für andere auf SiO₂ - basierenden Systeme und deren Schichten
b. Lösungsmittel
c. Verdickungsmittel
d. gegebenenfalls organischer(n) und/oder anorganischer(n) Säure(n)
e. gegebenenfalls Additive wie Entschäumer, Thixotropiermittel, Verlaufsmittel, Entlüfter, Haftvermittler

Die Ätzwirkung der erfindungsgemäß beschriebenen druckfähigen, homogenen, partikelfreien Ätzpasten mit nichtnewtonschem Fließverhalten auf Oberflächen Siliziumoxid- und Siliziumnitrid basierender Gläser und andere Siliziumoxid- und Siliziumnitrid-basierender Systeme beruht auf dem Einsatz von Lösungen Fluorid-haltiger Komponenten mit oder ohne Säurezusatz, insbesondere Lösungen von Fluoriden, Bifluoriden, Tetrafluoroboraten wie z.B. Ammonium-, Alkali-, Antimonfluoride, Ammonium-, Alkali-, Kalziumbifluoride, alkylierte Ammonium-, Kaliumtetrafluoroborate sowie deren Mischungen. Diese Ätzkomponenten sind in den Ätzpasten bereits bei Temperaturen im Bereich von 15 - 50 °C , insbesondere bei Raumtemperatur, wirksam und/oder werden durch Energieeintrag beispielsweise durch Wärmestrahlung durch IR-Strahler (bis ca. 300 °C), UV- oder Laser-Strahlung aktiviert.

Der Anteil der eingesetzten Ätzkomponenten liegt in einem Konzentrationsbereich von 2-20 Gew.-%, bevorzugt im Bereich von 5-15 Gew.-%, bezogen auf die Gesamtmasse der Ätzpaste.

Das Lösungsmittel kann den Hauptbestandteil der Ätzpaste bilden. Der Anteil kann im Bereich von 10-90 Gew.-%, bevorzugt im Bereich von 15 - 85 Gew.-%, bezogen auf die Gesamtmasse der Ätzpaste liegen.

Geeignete Lösungsmittel können anorganische und/oder organische Lösungsmittel oder Mischungen derselben sein. Geeignete Lösungsmittel, welche rein oder in entsprechenden Gemischen einsetzbar sind, können je nach Verwendungszweck sein:
- Wasser
- einfache oder mehrwertige Alkohole, wie z.B. Ethylenglykol, Diethylenglykol, Dipropylenglykol, 1,2-Propandiol, 1,4-Butandiol, 1,3-Butandiol, Glycerin, 1,5 Pentandiol, 2-Ethyl-1-hexanol oder deren Gemische
- Ketone wie z. B. Acetophenon, Methyl-2-hexanon, 2-Octanon, 4-Hydroxy-4-methyl-2-pentanon oder 1-Methyl-2-pyrrolidon
- Ether wie Ethylenglycolmonobutylether, Triethylenglykolmonomethylether, Diethylenglykolmonobutylether oder Dipropylenglykolmonomethylether
- Carbonsäureester wie [2,2-Butoxy-(Ethoxy)]-Ethylacetat
- Ester der Kohlensäure wie Propylencarbonat
- anorganische Mineralsäuren wie Salzsäure, Phosphorsäure, Schwefelsäure oder Salpetersäure oder organische Säuren, die eine Alkylrest-Kettenlänge von n = 1 - 10 aufweisen, oder deren Gemische. Der Alkylrest kann sowohl geradkettig als auch verzweigt sein. Insbesondere sind organische Carbon-, Hydroxycarbon- und Dicarbonsäuren wie Ameisensäure, Essigsäure, Milchsäure, Oxalsäure o.a. geeignet.

Diese Lösungsmittel oder deren Gemische sind u. a. auch geeignet, nach erfolgter Ätzung das Ätzmedium wieder zu entfernen und gegebenenfalls die geätzte Oberfläche zu reinigen.

Die Viskosität der erfindungsgemäß beschriebenen druckfähigen, homogenen, partikelfreien Ätzpasten mit nichtnewtonschem Fließverhalten wird durch netzwerkbildende, in der flüssigen Phase quellende Verdickungsmittel erzielt und lässt sich je nach gewünschtem Einsatzgebiet variieren. Die erfindungsgemäß beschriebenen druckfähigen, homogenen, partikelfreien Ätzpasten mit nichtnewtonschem Fließverhalten umfassen alle Ätzpasten, die keine Konstanz der Viskosität von der Scherrate aufweisen, insbesondere Ätzpasten mit scherverdünnender Wirkung. Das durch Verdickungsmittel erzeugte Netzwerk bricht unter Scherbelastung zusammen. Die Wiederherstellung des Netzwerkes kann ohne Zeitverzögerung (strukturviskose Ätzpasten mit plastischem bzw. pseudoplastischem Fließverhalten) bzw. mit Zeitverzögerung (Ätzpasten mit thixotropem Fließverhalten) erfolgen.

Die druckfähigen, homogenen, partikelfreien Ätzpasten mit nichtnewtonschem Fließverhalten sind mit Verdickungsmittelzusatz völlig homogen. Es kommen keine partikulären Verdicker wie z.B. partikuläre Silikon- oder Acrylharze zum Einsatz.

Mögliche Verdickungsmittel sind Polymere, basierend auf folgenden Monomereinheiten:
- Glukoseeinheiten
   - Cellulose/CellulosederivateAusgewählt aus der Gruppe Ethyl-, Hydroxylpropyl-, Hydroxylethylcellulose und der Salze des Glykolsäureethers der Cellulose, einschließlich Natrium-Carboxymethylhydroxylethylcellulose oder
   - Stärke / Stärkderivate, ausgewählt aus der Gruppe Natriumcarboxymethylstärke, und Stärkeether, oder anionisches Heteropolysaccharid
- Acrylateinheiten
   - funktionalisierte Methacrylateinheiten, insbesondere Kationisches Methacrylat/ Methacrylamid wie Borchigel® A PK
- funktionalisierte Vinyleinheiten d.h.
   - Polyvinylalkohole mit unterschiedlichem Hydrolysegrad, insbesondere Mowiol® 47-88 (teilhydrolysiert, d.h. Vinylacetat- und Vinylalkoholeinheiten) bzw. Mowiol® 56-98 (vollhydrolysiert)
   - Polyvinylpyrolidone (PVP), insbesondere PVP K-90 bzw. PVP K-120

Die Verdicker können einzeln oder in Kombinationen mit anderen Verdickern eingesetzt werden.

Der Anteil der Verdickungsmittel, der zur gezielten Einstellung des Viskositätsbereiches und grundsätzlich zur Bildung einer druckfähigen Pastee erforderlich ist, liegt im Bereich von 0,5 - 25 Gew.-%, bevorzugt 3 - 20 Gew.-%, bezogen auf die Gesamtmasse der Ätzpaste.

Wie bereits beschrieben, sind auch die erfindungsgemäßen Ätzpasten mit Verdickungsmittelzusatz völlig homogen. Sie enthalten keine partikulären Verdicker wie z.B. partikuläre Silikon- oder Acrylharze.

Organische und anorganische Säuren, deren pK_{S}-Wert zwischen 0-5 liegen, können den erfindungsgemäß beschriebenen druckfähigen, homogenen, partikelfreien Ätzpasten mit nichtnewtonschem Fließverhalten hinzugefügt sein. Anorganische Mineralsäuren wie z.B. Salzsäure, Phosphorsäure, Schwefelsäure, Salpetersäure als auch organische Säuren, die eine Alkylrest-Kettenlänge von n=1-10 aufweisen, verbessern die Ätzwirkung der druckfähigen, homogenen, partikelfreien Ätzpasten mit nichtnewtonschem Fließverhalten. Der Alkylrest der organischen Säuren kann sowohl geradkettig als auch verzweigt sein, insbesondere sind organische Carbon-, Hydroxycarbon- und Dicarbonsäuren wie Ameisensäure, Essigsäure, Milchsäure, Oxalsäure oder andere geeignet. Der Anteil der Säure/n kann im Bereich von 0 - 80 Gew % bezogen auf die Gesamtmasse der Ätzpaste liegen.

Additive mit für den gewünschten Zweck vorteilhaften Eigenschaften sind Entschäumer, wie z. B. das unter dem Handelsnamen erhältliche TEGO® Foamex N,
Thixotropiermittel, wie BYK@ 410, Borchigel® Thixo2,
Verlaufsmittel, wie TEGO® Glide ZG 400,
Entlüfter, wie TEGO® Airex 985 und
Haftvermittler, wie Bayowet® FT 929.

Diese können die Druckfähigkeit der Ätzpaste positiv beeinflussen. Der Anteil der Additive liegt im Bereich von 0 - 5 Gew % bezogen auf die Gesamtmasse der Ätzpaste.

Anwendungsgebiete für die erfindungsgemäßen Ätzpasten finden sich z. B. in der
- Solarzellenindustrie (Photovoltaik-Bauelemente wie Solarzellen, Photodioden)
- Halbleiterindustrie
- Glasindustrie
- Hochleistungselektronik

Die erfindungsgemäßen neuen, druckfähigen, homogenen, partikelfreien Ätzpasten mit nichtnewtonschem Fließverhalten können insbesondere überall dort eingesetzt werden, wo eine ganzflächige und/oder strukturierte Ätzung von Oberflächen Siliziumoxid- und Siliziumnitrid-basierender Gläsern und anderer auf Siliziumoxid- und Siliziumnitrid -basierenden Systemen sowie deren Schichten gewünscht wird.

So können ganze Flächen aber auch selektiv einzelne Strukturen in einheitliche massive nichtporöse und poröse Gläser und andere einheitliche massive nichtporöse und poröse Siliziumoxid- und Siliziumnitrid -basierende Systeme bis in die gewünschte Tiefe geätzt werden, d.h. der Ätzvorgang kann alle Bereiche zwischen dem mikrostrukturellen Aufrauhen (noch durchsichtige Gläser mit Lichtstreueffekt) über frosting-/Mattierungseffekte bis zum Ätzen tiefer Ätzstrukturen (z.B. Markierungen, Ornamente/Muster) umfassen. Anwendungsgebiete sind z.B.:
- die Herstellung von Sichtfenstem für Armaturen, Messgeräte aller Art
- die Herstellung von Glasträgern für Außenanwendungen (z.B. für Solarzellen und Wärmekollektoren)
- angeätzte Glasflächen im medizinischen und Sanitärbereich, sowie für dekorative Zwecke, einschließlich künstlerischer und architektonischer Anwendungen
- angeätzte Glasbehältnisse für Kosmetikartikel, Lebensmittel, Getränke
- gezieltes Anätzen von Gläsern und anderer Siliziumoxid-basierender Systeme für Markierungs-, Kennzeichnungszwecke, z.B. für Markierung/Kennzeichnung von Behälter-, Flachglas
- gezieltes Anätzen von Gläsern und anderer Siliziumoxid-basierender Systeme für mineralogische, geologische und mikrostrukturelle Untersuchungen

Insbesondere die Sieb-, Schablonen-, Tampon-, Stempel-, Ink-Jet-Druckverfahren sind geeignete Techniken, die Ätzpasten wie gewünscht aufzutragen. Generell ist neben den genannten Druckverfahren auch ein manuelles Auftragen (z. B. Pinsel) möglich.

Neben der industriellen Anwendung sind die Ätzpasten auch für den Heimwerker- und Hobbybedarf geeignet.

Die erfindungsgemäß beschriebenen druckfähigen, homogenen, partikelfreien Ätzpasten mit nichtnewtonschem Fließverhalten können überall dort eingesetz werden, wo Schichten von Gläsern und anderen Siliziumoxid-basierenden sowie von Siliziumnitrid-basierenden Systemen variabler Dicke ganzflächig und/oder strukturiert geätzt werden sollen. Anwendungsgebiete sind z.B.:
- sämtlich Ätzschritte an Schichten von Siliziumoxid- und Siliziumnitrid-basierenden Gläsern und anderen Siliziumoxid- und Siliziumnitrid-basierenden Systemen, die zur Herstellung von Photovoltaik-Bauelementen wie Solarzellen, Photodioden und dgl. führen, insbesondere sind dieses
   a) das Entfernen von Siliziumoxid-/dotiertem Siliziumoxid- (z.B. Phosphorglas nach der n-Dotierung der Solarzelle) und Siliziumnitridschichten
   b) das selektive Öffnen von Passivierungsschichten aus Siliziumoxid und Siliziumnitrid zur Erzeugung doppelstufiger selektiver Emitter (nach Öffnen nochmalige Dotierung zur Erzeugung von n⁺⁺-Schichten) und/oder lokaler p⁺ - Back-Surface-Fields (BSF)
   c) Kantenätzung von Siliziumoxid- und/oder Siliziumnitrid- beschichteten Solarzellenscheiben
- sämtliche Ätzschritte an Schichten von Siliziumoxid- und Siliziumnitrid- basierenden Gläsern und anderen Siliziumoxid- und Siliziumnitrid- basierenden Systemen, die zur Herstellung von Halbleiterbauelementen und Schaltkreisen führen und das Öffnen von Passivierungsschichten aus Siliziumoxid und Siliziumnitrid erfordern
- sämtliche Ätzschritte an Schichten von Siliziumoxid- und Siliziumnitrid- basierenden Gläsern und anderen Siliziumoxid- und Siliziumnitrid- basierenden Systemen, die zur Herstellung von Bauelementen in der Hochleistungselektronik führen

Insbesondere die Sieb-, Schablonen-, Tampon-, Stempel-, Ink-Jet-Druckverfahren sind geeignete Techniken, die Ätzpasten wie gewünscht aufzutragen. Generell ist neben den genannten Druckverfahren auch ein manuelles Auftragen möglich.

Neben der industriellen Anwendung sind die Ätzpasten auch für den Heimwerker- und Hobbybedarf geeignet.

### Beispiele

Zum besseren Verständnis und zur Verdeutlichung werden im folgenden Beispiele gegeben, die im Rahmen des Schutzbereiches der vorliegenden Erfindung liegen, jedoch nicht geeignet sind, die Erfindung auf diese Beispiele zu beschränken.

### Beispiel 1

| | |
|---|---|
| 21 g | Ethylenglycolmonobutylether |
| 39 g | 35%ige NH₄HF₂ - Lösung |
| 30 g | Ameisensäure (98-100% ig) |
| 10 g | PVP K-120 |

Ethylenglycolmonobutylether und Ameisensäure werden in einem PE-Becher vorgelegt. Im Anschluß daran wird eine wässrige 35 % ige NH₄HF₂-Lösung hinzugegeben. Dann erfolgt die sukzessive Zugabe von PVP K-120 unter Rühren (mindestens 400 U/min). Während der Zugabe und noch ca. 30 min danach muss intensiv weiter gerührt werden. Die Abfüllung in Behälter erfolgt nach einer kurzen Standzeit. Diese Standzeit ist erforderlich, damit sich die in der Ätzpaste gebildeten Bläschen auflösen können.

Diese Mischung ergibt eine Ätzpaste, mit der gezielt Siliziumoxid- und Siliziumnitrid- basierende Gläser und andere Siliziumoxid- und Siliziumnitrid- basierende Systeme und deren Schichten ganzflächig bzw. in Strukturen mit und/oder ohne Energieeintrag bis zu einer gewünschten Tiefe geätzt werden kann.

Die fotospektrometrisch ermittelte Ätzrate auf einer thermisch erzeugten Siliziumoxid- Schicht beträgt bei ganzflächiger Ätzung 120 nm/min. Die fotospektrometrisch ermittelte Ätzrate auf einer mittels PE-CVD erzeugten Siliziumnitrid-Schicht (Brechungsindex von n=1,98) beträgt bei ganzflächiger Ätzung 70 nm/min.

Die erhaltene Ätzpaste ist lagerstabil, leicht zu handhaben und druckfähig. Sie kann z.B. mit Wasser vom bedruckten Material bzw. vom Pastenträger (Sieb, Rakel, Schablone, Stempel, Klischee, Patrone usw.) entfernt oder im Ofen ausgebrannt werden.

### Beispiel 2

| | |
|---|---|
| 22 g | Triethylenglycolmonomethylether |
| 43 g | 35%ige NH₄HF₂ - Lösung |
| 20 g | deionisiertes Wasser |
| 12 g | PVP K-120 |

Triethylenglycolmonomethylether wird vorgelegt und wie in Beispiel 1 mit allen flüssigen Komponenten unter Rühren versetzt. Zum Schluss wird das Verdickungsmittel PVP K-120 unter Rühren (mindestens 400 U/min) sukzessiv eingetragen. Während der Zugabe und noch ca. 30 min danach muss intensiv weiter gerührt werden. Die Abfüllung in Behälter erfolgt nach einer kurzen Standzeit. Diese Standzeit ist erforderlich, damit sich die in der Ätzpaste gebildeten Bläschen auflösen können.

Diese Mischung ergibt eine Ätzpaste, mit der gezielt Siliziumoxid- und Siliziumnitrid- basierende Gläser und andere SiO₂- und Siliziumnitrid- basierende Systeme und deren Schichten ganzflächig bzw. in Strukturen mit und/oder ohne Energieeintrag bis zu einer gewünschten Tiefe geätzt werden kann.

Die fotospektrometrisch ermittelte Ätzrate auf einer thermisch erzeugten Siliziumoxid- Schicht beträgt bei ganzflächiger Ätzung 106 nm/min.

Die erhaltene Ätzpaste ist lagerstabil, leicht zu handhaben und druckfähig. Sie kann z.B. mit Wasser vom bedruckten Material bzw. vom Pastenträger (Sieb, Rakel, Schablone, Stempel, Klischee, Patrone usw.) entfernt oder im Ofen ausgebrannt werden.

### Beispiel 3

| | |
|---|---|
| 12 g | festes NH₄HF₂ |
| 142 g | Milchsäure |
| 10 g | Ethylcellulose |
| 36 g | Ethylenglycolmonobutylether |

Die Ethylcellulose wird im vorgelegten Ethylenglycolmonobutylether bei 40°C im Wasserbad sukzessiv eingerührt. Das feste NH₄HF₂ wird ebenfalls unter Rühren in der Milchsäure gelöst und anschließend zu der Ethylcellulose-Stammpaste zugegeben. Beides zusammen wird noch 2h bei 600 U/min gerührt.

Diese Mischung ergibt eine Ätzpaste, mit der gezielt Siliziumoxid- und Siliziumnitrid- basierende Gläser und andere Siliziumoxid- und Siliziumnitrid- basierende Systeme und deren Schichten ganzflächig bzw. in Strukturen mit und/oder ohne Energieeintrag bis zu einer gewünschten Tiefe geätzt werden kann.

Die fotospektrometrisch ermittelte Ätzrate auf einer thermisch erzeugten Siliziumoxid- Schicht beträgt bei ganzflächiger Ätzung 23 nm/min.

Die erhaltene Ätzpaste ist lagerstabil, leicht zu handhaben und druckfähig. Sie kann z.B. mit Aceton oder Butylacetat vom bedruckten Material bzw. vom Pastenträger (Sieb, Rakel, Schablone, Stempel, Klischee, Patrone usw.) entfernt oder im Ofen ausgebrannt werden.

### Beispiel 4

| | |
|---|---|
| 15 g | Ethylenglycolmonobutylether |
| 15 g | Triethylenglycolmonomethylether |
| 29 g | Propylencarbonat |
| 72 g | Ameisensäure |
| 46 g | 35%ige NH₄HF₂ - Lösung |
| 24 g | PVP K-90 |

Das Lösungsmittelgemisch und die Ameisensäure werden in einem PE-Becher vorgelegt. Im Anschluß daran wird eine wässrige 35 % ige NH₄HF₂-Lösung hinzugegeben. Dann erfolgt die sukzessive Zugabe von PVP K-120 unter Rühren (mindestens 400 U/min). Während der Zugabe und noch ca. 30 min danach muss intensiv weiter gerührt werden. Die Abfüllung in Behälter erfolgt nach einer kurzen Standzeit. Diese Standzeit ist erforderlich, damit sich die in der Ätzpaste gebildeten Bläschen auflösen können.

Diese Mischung ergibt eine Ätzpaste, mit der gezielt Siliziumoxid- und Siliziumnitrid- basierende Gläser und andere Siliziumoxid- und Siliziumnitrid- basierende Systeme und deren Schichten ganzflächig bzw. in Strukturen mit und/oder ohne Energieeintrag bis zu einer gewünschten Tiefe geätzt werden kann.

Die fotospektrometrisch ermittelte Ätzrate auf einer thermisch erzeugten Siliziumoxid- Schicht beträgt bei selektiver Ätzung von ca. 80 µm breiten Strukturen 67 nm/min. Die fotospektrometrisch ermittelte Ätzrate auf einer mittels PE-CVD erzeugten Siliziumnitrid- Schicht beträgt bei selektiver Ätzung von ca. 100 µm breiten Strukturen und einer Ätztemperatur von 40 °C 35 nm/min.

Die erhaltene Ätzpaste ist lagerstabil, leicht zu handhaben und druckfähig. Sie kann z.B. mit Wasser vom bedruckten Material bzw. vom Pastenträger (Sieb, Rakel, Schablone, Stempel, Klischee, Patrone usw.) entfernt oder im Ofen ausgebrannt werden.

## Patentansprüche

1. Druckfähiges, homogenes, partikelfreies Ätzmedium, welches bereits bei Temperaturen von 15 bis 50 °C wirksam ist und/oder gegebenenfalls durch Energieeintrag aktiviert wird, zum Ätzen von Oberflächen von Gläsern, ausgewählt aus der Gruppe der Gläser basierend auf Siliziumoxid und der Gläser basierend auf Siliziumnitrid,
**dadurch gekennzeichnet, dass** es eine Ätzpaste mit Nichtnewtonschen Fließverhalten ist, welche
a) mindestens eine ätzende Komponente, ausgewählt aus der Gruppe der Fluoride, Bifluoride und der Tetra-fluoroborate, in einer Menge von 2 - 20 Gew.-% bezogen auf die Gesamtmasse,
b) Lösungsmittel in einer Menge von 10 - 90 Gew.-% bezogen auf die Gesamtmasse
c) Polymere auf der Basis von Acrylat- oder von funktionalisierten Vinyleinheiten
und/oder Cellulose/Cellulosederivate, ausgewählt aus der Gruppe Ethyl-, Hydroxylpropyl-, Hydroxylethylcellulose, und der Salze des Glykolsäureethers der Cellulose einschließlich Natrium-Carboxymethylhydroxyl-ethylcellulose,
oder StärkelStärkderivate ausgewählt aus der Gruppe Natriumcarboxymethylstärke, Stärkeether
als Verdickungsmittel in einer Menge von 0,5 - 25 Gew.-% auf die Gesamtmasse
und
d) gegebenenfalls organische und/oder anorganische Säure in einer Menge von 0 - 80 Gew.-% auf die Gesamtmasse sowie gegebenenfalls
e) Additive wie Entschäumer, Thixotropiermittel, Verlaufsmittel, Entlüfter, Haftvermittler in einer Menge von 0 - 5 Gew.-% auf die Gesamtmasse
enthält.

2. Druckfähiges Ätzmedium gemäß Anspruch 1 für Oberflächen von Gläsern, **dadurch gekennzeichnet, daß** es als Verdickungsmittel Polymere auf der Basis von Acrylat- oder von funktionalisierten Vinyleinheiten und anionisches Heteropolysaccharid enthält.

3. Druckfähiges Ätzmedium gemäß Anspruch 1 oder 2 für Oberflächen von Gläsern, welche Elemente ausgewählt aus der Gruppe Kalzium, Natrium,
Aluminium, Blei, Lithium, Magnesium, Barium, Kalium, Bor, Berrylium, Phosphor, Gallium, Arsen, Antimon, Lanthan,Scandium, Zink, Thorium, Kupfer, Chrom, Mangan, Eisen, Kobalt, Nickel, Molybdän, Vanadium, Titan, Gold, Platin, Palladium, Silber, Cerium, Cäsium, Niob, Tantal, Zirkonium, Yttrium, Neodym und Praseodym enthalten.

4. Ätzmedium gemäß Anspruch 1 oder 2, **dadurch gekennzeichnet, daß** es mindestens eine anorganische und /oder organische Säure enthält, wobei die ätzende(n) Komponente(n) in einer Konzentration von 2 bis 20 Gew.% bezogen auf die Gesamtmasse vorliegt.

5. Ätzmedium gemäß Anspruch 4, **dadurch gekennzeichnet, dass** die ätzende(n) Komponente(n) in einer Konzentration von 5 bis 15 Gew.%, bezogen auf die Gesamtmasse vorliegt.

6. Ätzmedium gemäß der Ansprüche 1 und 4, **dadurch gekennzeichnet, daß** es als ätzende Komponente
mindestens eine Fluorverbindung ausgewählt aus der Gruppe der Ammonium-, Alkali-, Antimonfluoride, Ammonium-, Alkali-, Kalziumbifluoride, der alkylierten Ammonium- und der Kaliumtetrafluoroborate
und
gegebenenfalls mindestens eine anorganische Mineralsäure ausgewählt aus der Gruppe Salzsäure, Phosphorsäure, Schwefelsäure, Salpetersäure
und/oder gegebenenfalls
mindestens eine organische Säure, welche einen geradkettigen oder verzweigten Alkylrest mit 1 - 10 C-Atomen aufweisen kann, ausgewählt aus der Gruppe der Alkylcarbonsäuren, der Hydroxycarbonsäuren und der Dicarbonsäuren
enthält.

7. Ätzmedium gemäß Anspruch 1 oder 4 **dadurch gekennzeichnet, dass** es eine organische Säure ausgewählt aus der Gruppe Ameisensäure, Essigsäure, Milchsäure und Oxalsäure enthält.

8. Ätzmedium gemäß der Ansprüche 1 bis 6, **dadurch gekennzeichnet, dass** der Anteil der organischen und/oder anorganischen Säuren in einem Konzentrationsbereich von 0 bis 80 Gew.% bezogen auf die Gesamtmenge des Mediums liegt, wobei die hinzugefügten Säuren jeweils einen pKₛ-Wert zwischen 0 bis 5 besitzen.

9. Ätzmedium gemäß Anspruch 1 oder 2, **dadurch gekennzeichnet, daß** es als Lösungsmittel Wasser, ein- oder mehrwertige Alkohole, wie Glycerin, 1.2 Propandiol, 1,4-Butandiol, 1,3-Butandiol, 1,5-Pentandiol, 2-Ethyl-1-hexenol, Ethylenglykol, Diethylenglykol und Dipropylenglykol, sowie deren Ether wie, Ethylenglycol-monobutylether, Triethylenglykolmonomethylether, Diethylenglykolmonobuthylether und Dipropylenglykolmonomethylether) und Ester wie [2,2-Butoxy-(Ethoxy)]-Ethylacetat, Ester der Kohlensäure wie Propylencarbonat, Ketone, wie Acetophenon, Methyl-2-hexanon, 2-Octanon, 4-Hydroxy-4-methyl-2-pentanon und 1-Methyl-2-pyrrolidon, als solche oder im Gemisch in einer Menge von 10 bis 90 Gew.%, vorzugsweise in einer Menge von 15 bis 85 Gew.%, bezogen auf die Gesamtmenge des Mediums verwendet werden.

10. Ätzmedium gemäß Anspruch 1 oder 2, **dadurch gekennzeichnet, daß** es als Verdickungsmittel Polymere auf der Basis von Acrylat oder von funktionalisierten Vinyleinheiten und gegebenenfalls Cellulose/Cellulosederivate oder Stärke/Stärkderivate und in einer Menge von 0,5 bis 25 Gew.-%, vorzugsweise 3 bis 20 Gew.-%, bezogen auf die Gesamtmenge enthält.

11. Ätzmedium gemäß Anspruch 1 oder 2, **dadurch gekennzeichnet, daß** es 0 bis 5 Gew.-% bezogen auf die Gesamtmenge Additive, ausgewählt aus der Gruppe Entschäumer, Thixotropiermittel, Verlaufsmittel, Entlüfter, und Haftvermittler, enthält

12. Verwendung eines Ätzmediums gemäß der Ansprüche 1 - 10 in einem Ätzverfahren, indem es auf die zu ätzende Oberfläche aufgebracht wird und nach einer Einwirkzeit von 1-15 min wieder entfernt wird.

13. Verwendung eines Ätzmediums gemäß der Ansprüche 1 bis 10 in Sieb-, Schablonen-, Tampon-, Stempel-, Ink-Jet- und manuellen Druckverfahren.

14. Verwendung eines Ätzmediums gemäß der Ansprüche 1 bis 10 in der Photovoltaik, Halbleitertechnik, Hochleistungselektronik, sowie zur Herstellung von Photodioden und zur Herstellung von Glasträgern für Solarzellen oder für Wärmekollektoren.

15. Verwendung eines Ätzmedium gemäß der Ansprüche 1 - 10 zum Ätzen von einheitlichen, massiven, nichtporösen oder porösen Gläsern, basierend auf Silziumoxid- oder -nitrid-Systemen sowie von Schichten variabler Dicke solcher Systeme.

16. Verwendung eines Ätzmediums gemäß der Ansprüche 1 bis 10 zum Entfernen von Siliziumoxid-/dotierten Siliziumoxid- und Siliziumnitridschichten oder zum selektiven Öffnen von Passivierungsschichten aus Siliziumoxid und Siliziumnitrid zur Erzeugung doppelstufiger selektiver Emitter und/oder lokaler p⁺-Back-Surtace-Fields.

17. Verwendung eines Ätzmediums gemäß der Ansprüche 1 - 10 zum ganzflächigen und/oder strukturierten Ätzen von Schichten von Gläsern und anderen Siliziumoxid-basierenden sowie von Siliziumnitrid-basierenden Systemen variabler Dicke
im Herstellungsprozess von Bauelementen für die Hochleistungselektronik
oder
im Herstellungsprozess von Halbleiterbauelementen und deren Schaltkeisen
oder
zum selektiven Öffnen von Passivierungsschichten aus Siliciumoxid und Siliciumnitrid zur Erzeugung doppelstufiger selektiver Emitter und/oder lokaler p⁺-Back-Surface-Fields
oder
zum Kantenätzen von Siliziumoxid- und Siliziumnitrid-beschichteten Solarzellenscheiben.

18. Verwendung eines Ätzmediums gemäß der Ansprüche 1 bis 10 für mikrostrukturelle Untersuchungen.

19. Verfahren zum Ätzen von anorganischen, glasartigen, kristallinen Oberflächen, **dadurch gekennzeichnet, dass** ein Ätzmedium gemäß der Ansprüche 1 - 10 ganzflächig oder gemäß der Ätzstrukturvorlage gezielt nur an den Stellen aufgetragen wird, an denen eine Ätzung erwünscht ist und nach erfolgter Ätzung mit einem Lösungsmittel oder Lösungsmittelgemisch abgespült wird.

20. Verfahren gemäß Anspruch 19, **dadurch gekennzeichnet, dass** das Ätzmedium nach erfolgter Ätzung mit Wasser abgespült wird.

## Claims

1. Printable, homogeneous, particle-free etching medium which is already effective at temperatures of 15 to 50°C and/or is activated, if necessary, by input of energy, for etching surfaces of glasses selected from the group of glasses based on silicon oxide and glasses based on silicon nitride,
**characterised in that** it is an etching paste having non-Newtonian flow behaviour which comprises
a) at least one etching component selected from the group of the fluorides, bifluorides and tetrafluoroborates in an amount of 2 - 20% by weight, based on the total mass,
b) solvents in an amount of 10 - 90% by weight, based on the total mass,
c) polymers based on acrylate or on functionalised vinyl units and/or cellulose/cellulose derivatives selected from the group ethyl-, hydroxypropyl-, hydroxyethylcellulose, and the salts of the glycolic acid ether of cellulose, including sodium carboxymethylhydroxyethylcellulose,
or starch/starch derivatives selected from the group sodium carboxy-methylstarch, starch ethers
as thickeners in an amount of 0.5 - 25% by weight, based on the total mass,
and
d) optionally organic and/or inorganic acid in an amount of 0 - 80% by weight, based on the total mass, and optionally
e) additives, such as antifoams, thixotropic agents, flow-control agents, deaerating agents, adhesion promoters, in an amount of 0 - 5% by weight, based on the total mass.

2. Printable etching medium according to Claim 1 for surfaces of glasses, **characterised in that** it comprises, as thickeners, polymers based on acrylate or on functionalised vinyl units and anionic heteropolysaccharide.

3. Printable etching medium according to Claim 1 or 2 for surfaces of glasses which comprise elements selected from the group calcium, sodium, aluminium, lead, lithium, magnesium, barium, potassium, boron, beryllium, phosphorus, gallium, arsenic, antimony, lanthanum, scandium, zinc, thorium, copper, chromium, manganese, iron, cobalt, nickel, molybdenum, vanadium, titanium, gold, platinum, palladium, silver, cerium, caesium, niobium, tantalum, zirconium, yttrium, neodymium and praseodymium.

4. Etching medium according to Claim 1 or 2, **characterised in that** it comprises at least one inorganic and/or organic acid, where the etching component(s) is present in a concentration of 2 to 20% by weight, based on the total mass.

5. Etching medium according to Claim 4, **characterised in that** the etching component(s) is present in a concentration of 5 to 15% by weight, based on the total mass.

6. Etching medium according to Claims 1 and 4, **characterised in that** it comprises, as etching component,
at least one fluorine compound selected from the group of the ammonium, alkali metal and antimony fluorides, ammonium, alkali metal and calcium bifluorides, alkylated ammonium and potassium tetrafluoroborates
and
optionally at least one inorganic mineral acid selected from the group hydrochloric acid, phosphoric acid, sulfuric acid, nitric acid and/or optionally
at least one organic acid, which may contain a straight-chain or branched alkyl radical having 1 - 10 C atoms, selected from the group of the alkyl-carboxylic acids, hydroxycarboxylic acids and dicarboxylic acids.

7. Etching medium according to Claim 1 or 4, **characterised in that** it comprises an organic acid selected from the group formic acid, acetic acid, lactic acid and oxalic acid.

8. Etching medium according to Claims 1 to 6, **characterised in that** the proportion of the organic and/or inorganic acids is in a concentration range from 0 to 80% by weight, based on the total amount of the medium, where the added acids each have a pKₐ value between 0 and 5.

9. Etching medium according to Claim 1 or 2, **characterised in that** the solvents used are water, mono- or polyhydric alcohols, such as glycerol, 1,2-propanediol, 1,4-butanediol, 1,3-butanediol, 1,5-pentanediol, 2-ethyl-1-hexenol, ethylene glycol, diethylene glycol and dipropylene glycol, and ethers thereof, such as ethylene glycol monobutyl ether, triethylene glycol monomethyl ether, diethylene glycol monobutyl ether and dipropylene glycol monomethyl ether, and esters, such as [2,2-butoxy(ethoxy)]ethyl acetate, esters of carbonic acid, such as propylene carbonate, ketones, such as acetophenone, methyl-2-hexanone, 2-octanone, 4-hydroxy-4-methyl-2-pentanone and 1-methyl-2-pyrrolidone, as such or as a mixture, in an amount of 10 to 90% by weight, preferably in an amount of 15 to 85% by weight, based on the total amount of the medium.

10. Etching medium according to Claim 1 or 2, **characterised in that** it comprises, as thickeners, polymers based on acrylate or on functionalised vinyl units and optionally cellulose/cellulose derivatives or starch/starch derivatives in an amount of 0.5 to 25% by weight, preferably 3 to 20% by weight, based on the total amount.

11. Etching medium according to Claim 1 or 2, **characterised in that** it comprises 0 to 5% by weight, based on the total amount, of additives selected from the group antifoams, thixotropic agents, flow-control agents, deaerating agents and adhesion promoters.

12. Use of an etching medium according to Claims 1 - 10 in an etching method in which it is applied to the surface to be etched and removed again after an exposure time of 1 - 15 min.

13. Use of an etching medium according to Claims 1 to 10 in screen printing, silk-screen printing, pad printing, stamp printing, ink-jet printing and manual printing methods.

14. Use of an etching medium according to Claims 1 to 10 in photovoltaics, semiconductor technology, high-performance electronics, and for the production of photodiodes and for the production of glass supports for solar cells or for thermal collectors.

15. Use of an etching medium according to Claims 1 - 10 for etching uniform, solid, nonporous or porous glasses based on silicon-oxide or silicon-nitride systems, and variable-thickness layers of such systems.

16. Use of an etching medium according to Claims 1 to 10 for the removal of silicon-oxide/doped silicon-oxide and silicon-nitride layers or for the selective opening of passivation layers comprising silicon oxide and silicon nitride for the generation of two-stage selective emitters and/or local p⁺ back surface fields.

17. Use of an etching medium according to Claims 1 - 10 for the full-area and/or structured etching of layers of glasses and other silicon oxide-based and silicon nitride-based systems of variable thickness in the process for the production of components for high-performance electronics
or
in the process for the production of semiconductor components and their circuits
or
for the selective opening of passivation layers comprising silicon oxide and silicon nitride for the generation of two-stage selective emitters and/or local p⁺ back surface fields
or
for the edge etching of silicon oxide- and silicon nitride-coated solar cell panels.

18. Use of an etching medium according to Claims 1 to 10 for microstructural studies.

19. Method for etching inorganic, glass-like, crystalline surfaces, **characterised in that** an etching medium according to Claims 1 - 10 is applied over the entire area or specifically in accordance with the etch structure mask only to the points at which etching is desired and is rinsed off with a solvent or solvent mixture after the etching is complete.

20. Method according to Claim 19, **characterised in that** the etching medium is rinsed off with water after the etching is complete.

## Revendications

1. Milieu de gravure imprimable, homogène et exempt de particules qui est déjà efficace à des températures de 15 à 50°C et/ou est activé, si nécessaire, au moyen d'une entrée d'énergie, pour graver des surfaces de verres choisis parmi le groupe des verres basés sur oxyde de silicium et des verres basés sur nitrure de silicium,
**caractérisé en ce qu'**il s'agit d'une pâte de gravure présentant un comportement en écoulement non Newtonien, laquelle comprend :
a) au moins un composant de gravure choisi parmi le groupe des fluorures, des bifluorures et des tétrafluoroborates selon une quantité de 2 - 20% en poids, sur la base de la masse totale,
b) des solvants selon une quantité de 10 - 90% en poids, sur la base de la masse totale,
c) des polymères basés sur acrylate ou sur des unités de vinyle fonctionnalisées
et/ou de la cellulose/des dérivés de cellulose choisis parmi le groupe constitué par éthylcellulose, hydroxypropylcellulose, hydroxyéthyl-cellulose, et les sels de l'éther d'acide glycolique de cellulose, incluant carboxyméthylhydroxyéthylcellulose de sodium,
ou de l'amidon/des dérivés d'amidon choisis parmi le groupe constitué par carboxyméthylamidon de sodium, des éthers d'amidon en tant qu'épaississeurs selon une quantité de 0,5 - 25% en poids, sur la base de la masse totale,
et
d) en option, un acide organique et/ou inorganique selon une quantité de 0 - 80% en poids, sur la base de la masse totale,
et en option,
e) des additifs, tels que des anti-mousse, des agents thixotropiques, des agents de contrôle d'écoulement, des agents de désaération, des stimulateurs d'adhérence, selon une quantité de 0 - 5% en poids, sur la base de la masse totale.

2. Milieu de gravure imprimable selon la revendication 1 pour des surfaces de verres, **caractérisé en ce qu'**il comprend, en tant qu'épaississeurs, des polymères basés sur acrylate ou sur des unités de vinyle fonctionnalisées et de l'hétéropolysaccharide anionique.

3. Milieu de gravure imprimable selon la revendication 1 ou 2 pour des surfaces de verres, lequel comprend des éléments choisis parmi le groupe constitué par calcium, sodium, aluminium, plomb, lithium, magnésium, baryum, potassium, bore, béryllium, phosphore, gallium, arsenic, antimoine, lanthane, scandium, zinc, thorium, cuivre, chrome, manganèse, fer, cobalt, nickel, molybdène, vanadium, titane, or, platine, palladium, argent, cérium, césium, niobium, tantale, zirconium, yttrium, néodyme et praséodyme.

4. Milieu de gravure imprimable selon la revendication 1 ou 2, **caractérisé en ce qu'**il comprend au moins un acide inorganique et/ou organique, où le/les composant(s) de gravure est/sont présent(s) selon une concentration de 2 à 20% en poids, sur la base de la masse totale.

5. Milieu de gravure imprimable selon la revendication 4, **caractérisé en ce que** le/les composant(s) est/sont présent(s) selon une concentration de 5 à 15% en poids, sur la base de la masse totale.

6. Milieu de gravure selon les revendications 1 et 4, **caractérisé en ce qu'**il comprend, en tant que composant de gravure,
au moins un composé de fluor choisi parmi le groupe constitué par les fluorures d'ammonium, de métaux alcalins et d'antimoine, les bifluorures d'ammonium, de métaux alcalins et de calcium, les tétrafluoroborates alkylatés d'ammonium et de potassium
et
en option, au moins un acide minéral inorganique choisi parmi le groupe constitué par acide chlorhydrique, acide phosphorique, acide sulfurique, acide nitrique
et/ou en option
au moins un acide organique, lequel peut contenir un radical alkyle en chaîne droite ou ramifié comportant 1 - 10 atomes de C, choisi parmi le groupe constitué par les acides alkylcarboxyliques, les acides hydroxy-carboxyliques et les acides dicarboxyliques.

7. Milieu de gravure selon la revendication 1 ou 4, **caractérisé en ce qu'**il comprend un acide organique choisi parmi le groupe constitué par l'acide formique, l'acide acétique, l'acide lactique et l'acide oxalique.

8. Milieu de gravure selon les revendications 1 à 6, **caractérisé en ce que** la proportion des acides organiques et/ou inorganiques est dans une plage de concentrations de 0 à 80% en poids, sur la base de la quantité totale du milieu, où les acides ajoutés présentent chacun une valeur de pKₐ entre 0 et 5.

9. Milieu de gravure selon la revendication 1 ou 2, **caractérisé en ce que** les solvants utilisés sont l'eau, les alcools monohydriques ou polyhydriques, tels que glycérol, 1,2-propanediol, 1,4-butanediol, 1,3-butanediol, 1,5-pentanediol, 2-éthyl-1-hexénol, éthylène glycol, diéthylène glycol et dipropylène glycol, et leurs éthers, tels qu'éthylène glycol monobutyl éther, triéthylène glycol monométhyl éther, diéthylène glycol monobutyl éther et dipropylène glycol monométhyl éther, et les esters, tels que [2,2-butoxy(éthoxy)]éthyl acétate, les esters d'acide carbonique, tels que propylène carbonate, les cétones, tels qu'acétophénone, méthyl-2-hexanone, 2-octanone, 4-hydroxy-4-méthyl-2-pentanone et 1-méthyl-2-pyrrolidone, en tant que tels ou en tant que mélange, selon une quantité de 10 à 90% en poids, de préférence selon une quantité de 15 à 85% en poids, sur la base de la quantité totale du milieu.

10. Milieu de gravure selon la revendication 1 ou 2, **caractérisé en ce qu'**il comprend, en tant qu'épaississeurs, des polymères basés sur acrylate ou sur des unités de vinyle fonctionnalisées et en option, de la cellulose/des dérivés de cellulose ou de l'amidon/des dérivés d'amidon selon une quantité de 0,5 à 25% en poids, de préférence de 3 à 20% en poids, sur la base de la quantité totale.

11. Milieu de gravure selon la revendication 1 ou 2, **caractérisé en ce qu'**il comprend 0 à 5% en poids, sur la base de la quantité totale, d'additifs choisis parmi le groupe constitué par les anti-mousse, les agents thixotropiques, les agents de contrôle d'écoulement, les agents de désaération et les stimulateurs d'adhérence.

12. Utilisation d'un milieu de gravure selon les revendications 1 - 10 au niveau d'un procédé de gravure dans lequel il est appliqué sur la surface destinée à être gravée et il est enlevé à nouveau après un temps d'exposition de 1 - 15 minutes.

13. Utilisation d'un milieu de gravure selon les revendications 1 - 10 au niveau de procédés d'impression par écran, d'impression par sérigraphie, d'impression par patin, d'impression par matriçage, d'impression par jet d'encre et d'impression manuelle.

14. Utilisation d'un milieu de gravure selon les revendications 1 - 10 au niveau du photovoltaïque, de la technologie des semiconducteurs, de l'électronique haute performance, et pour la production de photodiodes et pour la production de supports en verre pour des cellules solaires ou pour des collecteurs thermiques.

15. Utilisation d'un milieu de gravure selon les revendications 1 - 10 au niveau d'un procédé pour la gravure de verres uniformes, solides, non poreux ou poreux sur la base de systèmes par oxyde de silicium ou nitrure de silicium, et de couches d'épaisseurs variables de ces systèmes.

16. Utilisation d'un milieu de gravure selon les revendications 1 - 10 pour l'enlèvement de couches en oxyde de silicium/dopées à l'oxyde de silicium et en nitrure de silicium ou pour l'ouverture sélective de couches de passivation comprenant de l'oxyde de silicium et du nitrure de silicium pour la génération d'émetteurs sélectifs à deux niveaux et/ou de zones locales de surface arrière p⁺.

17. Utilisation d'un milieu de gravure selon les revendications 1 - 10 pour la gravure pleine aire et/ou structurée de couches de verres et d'autres systèmes basés sur oxyde de silicium et basés sur nitrure de silicium d'épaisseurs variables
au niveau du procédé pour la production de composants pour l'électronique haute performance
ou
au niveau du procédé pour la production de composants semiconducteurs et de leurs circuits
ou
pour l'ouverture sélective de couches de passivation comprenant de l'oxyde de silicium et du nitrure de silicium pour la génération d'émetteurs sélectifs à deux niveaux et/ou de zones locales de surface arrière p⁺
ou
pour la gravure latérale de panneaux de cellules solaires revêtus d'oxyde de silicium et de nitrure de silicium.

18. Utilisation d'un milieu de gravure selon les revendications 1 - 10 pour des études microstructurelles.

19. Procédé pour graver des surfaces inorganiques, similaires à du verre ou cristallines **caractérisé en ce qu'**un milieu de gravure selon les revendications 1 - 10 est appliqué sur la totalité de l'aire ou de façon spécifique conformément au masque de structure de gravure seulement au niveau des points au niveau desquels une gravure est souhaitée et est évacué par rinçage à l'aide d'un solvant ou d'un mélange de solvants après que la gravure est terminée.

20. Procédé selon la revendication 19, **caractérisé en ce que** le milieu de gravure est évacué par rinçage à l'eau après que la gravure est terminée.
